Europäisches Patentamt

European Patent Office

Office européen des brevets

(19)

(11) Publication number : **0 509 785 A2**

# (12) EUROPEAN PATENT APPLICATION

(21) Application number : **92303383.1**

(22) Date of filing : **15.04.92**

(51) Int. Cl.⁵ : **G11B 27/10, G11B 19/02**

(30) Priority : **15.04.91 JP 82575/91**
**15.04.91 JP 82576/91**

(43) Date of publication of application :
**21.10.92 Bulletin 92/43**

(84) Designated Contracting States :
**DE FR GB**

(71) Applicant : **PIONEER ELECTRONIC**
**CORPORATION**
**No. 4-1, Meguro 1-chome**
**Meguro-ku Tokyo 153 (JP)**

(72) Inventor : **Yamagishi, Koji**
**Pioneer Tokorozawa Plant, 2610, Hanazono**
**4-chome**
**Tokorozawa-City, Saitama (JP)**

(74) Representative : **Davies, Christopher Robert**
**Frank B. Dehn & Co. Imperial House 15-19**
**Kingsway**
**London WC2B 6UZ (GB)**

(54) **Apparatus for playing information recording medium.**

(57) An apparatus for playing an information recording medium in which a next operating request can be accepted and reserved before the completion of the preceding operating process so that a high operating efficiency is obtained. The kind of operation request signal or operation command is discriminated, thereby discriminating at least one operation to be executed among quick response operation, writing operation, and memorized content executing operation in accordance with the operation request signal or the operation command which has been discriminated and a designated mode. An operation command corresponding to the operation request signal is generated when the quick response operation is discriminated. The operation request signal or the operation command is sequentially stored when the writing operation is discriminated. The operation request signal or the operation command which has been stored in the reserved operation memory is read out and provided when the memorized content executing operation is discriminated. In the second embodiment, at least one operation to be executed is discriminated among the quick response operation, writing operation, and memorized content executing operation in accordance with a designated mode.

EP 0 509 785 A2

Fig. 3

The invention relates to an apparatus for playing an information recording medium and, more particularly, to control of operations in the apparatus for playing an information recording medium.

Generally, in an apparatus for playing an information recording medium such as a disc player or the like, if a request of a new operation is made through the keyboard, for example, during the execution of a certain operating process, the operation of the apparatus is ordinarily such that the operating process being executed is canceled so that a new operating process is immediately executed, or otherwise the request of new operating process is not accepted. For example, in a disc player disclosed in Japanese Patent Application Laid-Open No.62-8388, when a reproduction command key is depressed during the scanning operation in order to reproduce a head portion of program information on a disc only for a predetermined time, the operating mode is immediately switched to an ordinary reproduction mode. That is, if a new operating process is to be executed continuously after the operating process which is being executed, the user has to wait for the completion of the operating process which is being executed, and then the user must request the next operation. For the user who has already determined the operation to be executed, it is annoying to require a new operation every time one operating process is completed. Also, command of such a new operating process entails a time loss, so that the operating performance becomes insufficient.

The present invention has been made in consideration of the above problems and it is an object of the invention to provide an apparatus for playing an information recording medium in which, in case of continuously executing a new operating process after a certain operation, a request for the next operation can be accepted and reserved before the completion of the preceding operating process so that a good operating performance is obtained.

According to the first aspect of the invention, an apparatus for playing an information recording medium has control means for providing an operation command according to an operation request signal being supplied and executes the operation according to the operation command, wherein the apparatus comprises first discriminating means for discriminating the kind of operation request signal or operation command and second discriminating means for discriminating at least one operation to be executed among quick response operation, writing operation, and memorized content executing operation in accordance with the operation request signal or operation command which has been discriminated by the first discriminating means and a designated mode, and wherein the control means has: quick response means for generating an operation command corresponding to the quick response operation quickly in response to the operation request signal when the quick response operation is discriminated by the second discriminating means; reserved operation memory means for sequentially storing the operation request signal or the operation command when the writing operation is discriminated; and executing means for reading out the operation request signal or the operation command stored in the reserved operation memory means and providing the command when the memorized content executing operation is discriminated.

In the apparatus for playing the information recording medium according to the first aspect of the invention, the kind of operation request signal or operation command is discriminated by the first discriminating means, at least one operation to be executed is discriminated by the second discriminating means among the quick response operation, writing operation, and memorized content executing operation in accordance with the operation request signal or operation command which has been discriminated by the first discriminating means and the designated mode, and in the control means, the operation command corresponding to the quick response operation is generated quickly in response to the operation request signal by the quick response means when the quick response operation is discriminated by the second discriminating means, the operation request signal or the operation command is sequentially stored by the reserved operation memory means when the writing operation is discriminated, and the operation request signal or the operation command stored in the reserved operation memory means is read out and provided by the executing means when the memorized content executing operation is discriminated, thereby controlling operations of the apparatus.

According to the second aspect of the invention, an apparatus for playing an information recording medium has control means for an operation command according to an operation request signal being supplied and executes the operation according to the operation command, wherein the apparatus comprises discriminating means for discriminating at least one operation to be executed among quick response operation, writing operation, and memorized content executing operation in accordance with a designated mode, and wherein the control means has: quick response means for generating an operation command corresponding to the quick response operation in quick response to the operation request signal when the quick response operation is discriminated by the discriminating means; reserved operation memory means for sequentially storing the operation request signal or the operation command when the writing operation is discriminated; and executing means for reading out the operation request signal or the operation command stored in the reserved operation memory means and providing the operation request when the memorized content executing operation is discriminated.

In the apparatus for playing the information recording medium according to the second aspect of the invention, at least one operation to be executed is discriminated by the discriminating means among the quick response operation, the writing operation, and the memorized content executing operation in accordance with the designated mode, and in the control means, the operation command corresponding to the quick response operation is generated quickly in response to the operation request signal by the quick response means when the quick response operation is discriminated by the discriminating means, the operation request signal or the operation command is sequentially stored by the reserved operation memory means when the writing operation is discriminated, and the operation request signal or the operation command stored in the reserved operation memory means is read out and provided by the executing means when the memorized content executing operation is discriminated, thereby controlling the operation.

Embodiments of the present invention will now be described, by way of example only, with reference to the accompanying drawings, in which:

Fig. 1 is a block diagram showing an example of a CD player to which the invention is applied;

Fig. 2 is a front view of a surface console panel of the CD player;

Fig. 3 is a flowchart showing a processing procedure in a reserving mode according to the first embodiment;

Fig. 4 is a flowchart showing a processing procedure which is common to the first to third embodiments;

Fig. 5 is a flowchart showing a processing procedure in a registration mode according to the second embodiment; and

Fig. 6 is a flowchart showing a processing procedure for an interrupting operation control during the execution of a reserving mode according to the third embodiment.

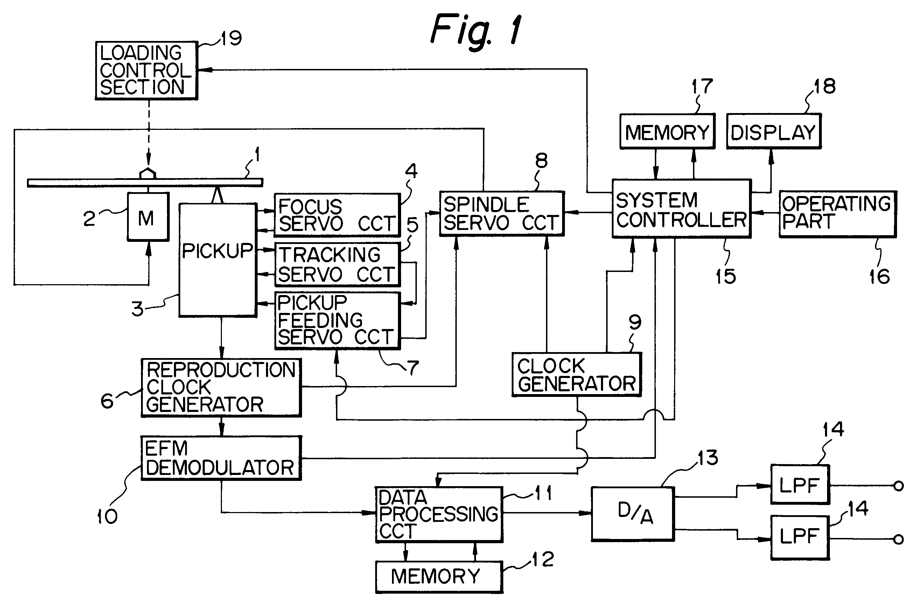

Fig. 1 is a block diagram showing an example of construction of a CD player to which the invention is applied. The fundamental construction of the above example of construction is similar to that of the CD player disclosed in Japanese Utility Model Application Laid-Open No. 60-12892, Japanese Patent Application Laid-Open Nos. 62-204488 and 2-263378, and the like.

In Fig. 1, a digital audio disc (generally, referred to as compact disc; hereinafter, abbreviated as CD) 1 as an information recording medium is rotated by a spindle motor 2 provided as playing means, and recorded information on the CD 1 is read out by an optical pickup 3. Output signals of the pickup 3 are supplied to a focus servo circuit 4, a tracking servo circuit 5, and a reproduction clock generating circuit 6, respectively. The playing means further includes a pickup feeding servo circuit 7, a spindle servo circuit 8, and a reference clock generating circuit 9. Since the operation performed by the interaction of the various component elements of such playing means is well known, the detailed description is not given here.

A read signal transmitted through the reproduction clock generating circuit 6 is demodulated to a CD format signal by an EFM demodulating circuit 10 and is subjected to various data processes by a data processing circuit 11. Thereafter, the demodulated data is once stored into data memory 12. After that, the data is read out by using a reference clock signal from the clock generating circuit 9 and is supplied to an output terminal as a left/right audio signal through a D/A converter 13 and a low-pass filter (LPF) 14.

A system controller 15 as control means comprises a so-called microcomputer. The system controller 15 reads out a subcode in the CD format signal from the EFM demodulating circuit 10, thereby obtaining various control information including TOC information in lead-in and program areas of the CD 1. The system controller 15 also has a key scanning function, thereby constituting operation request signal generating means which produces an operation request signal according to a key operation of an operating part 16. The system controller 15 supplies display data to a display 18 in accordance with instruction codes written in a RAM 17. Furthermore, the controller 15 controls the pickup feeding servo circuit 7, the spindle servo circuit 8, and a loading control section 19 in the playing means and generates operation commands such as normal reproduction, special reproduction like a scan, search, or the like, pause, and tray-open in accordance with various request signals.

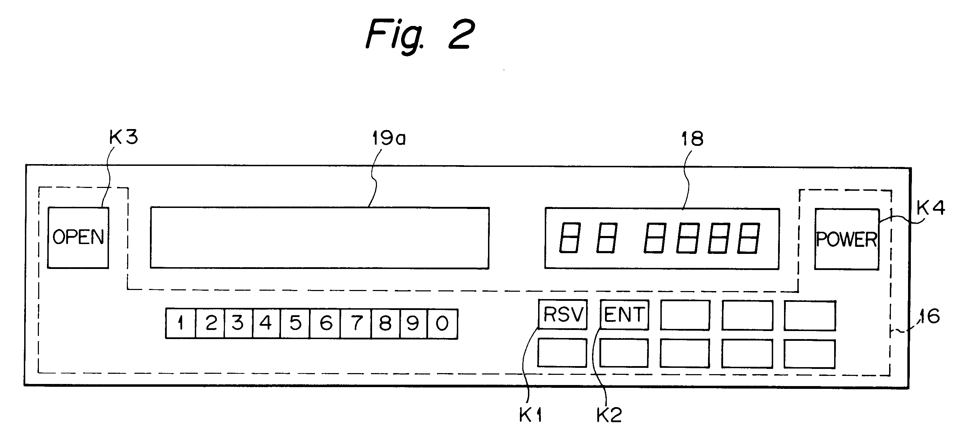

As a console of such a CD player, the operating part 16, the display 18, and a CD tray 19a are arranged on a surface panel as shown in, e.g., Fig. 2. There are provided a reserving mode key $K_1$ and a registration key $K_2$ for generating a reserving mode request and a registration mode request respectively, which will be described hereinafter, a tray open key $K_3$ for generating a disc loading/unloading command, and a power source key $K_4$ for generating a power supply on/off command.

In the above-described construction, the system controller 15 executes the operating mode as a reserving mode in response to the depression of the reserving mode key $K_1$ in order to enable the next operating request to be accepted without waiting for the completion of the preceding operating process.

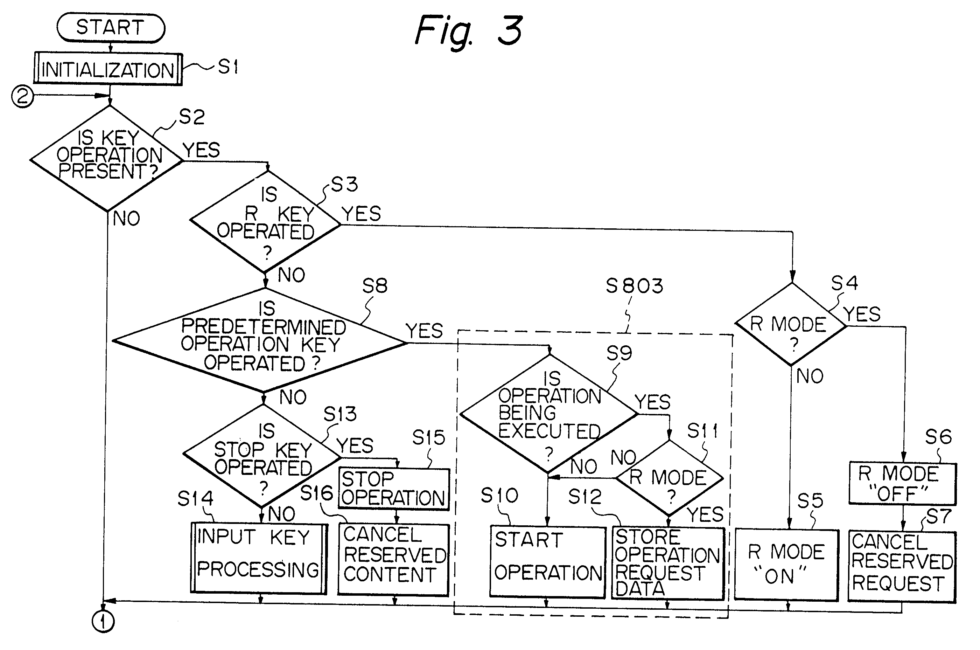

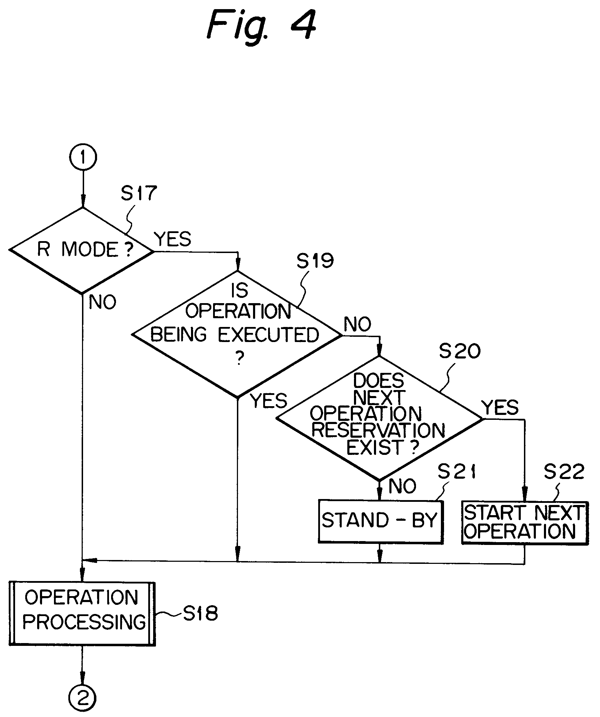

Figs. 3 and 4 are flowcharts showing processing procedures in such a reserving mode (hereinafter, referred to as R mode).

In Fig. 3, when the CD player is initialized (step S1) upon power-up, the system controller 15 detects the presence or absence of a key entry through the operating part 16 (step S2). When a key entry is detected in step S2, a check is first made to see if the key entry is the depression of a reserving mode key, namely, a key entry of the R mode designation or not (step S3) in order to determine the kind of key entry. When the key entry of the R mode designation is detected in step S3, a check is made to see if the CD player is currently executing the R mode or not (step S4). When it is detected that the R mode is not being executed in step S4, a reserving mode designation signal is generated and the CD player is set to the R mode from this point in time (step S5). When it is determined that the R mode is being executed, it means the detection of a state that the R mode designation key has been depressed again this time after the start of the R mode. In this case, the processor determines that cancellation of the R mode is instructed, and the R mode is set to off (step S6), and the reservation contents up to the preceding reservation stored in the RAM 17 are cancelled (step S7).

When it is detected that the key entry is not the designation of the R mode in step S3, a check is made to see if the key entry is a predetermined operation request such as a reproduction operation or the like or not (step S8). When it is determined that the key entry is the predetermined operation request, a check is made to see if the operation which has been reserved before or the operation requested previous time is currently being executed or not (step S9). When it is determined that such an operation is not being executed currently, namely, in a state in which all of the operations reserved are finished or a state in which the first predetermined operation is requested after the start of the R mode, the execution of the predetermined operation requested is immediately started by the key entry (step S10). When it is determined in step S9 that the operation which has been reserved before is still being executed currently, a check is made to see if the R mode is included in the mode which is currently being executed by the CD player or not (step S11). When it is determined that the R mode is not being executed, the processing routine advances to step S10. When it is determined in step S11 that the R mode is being executed, the predetermined operation instructed by the key entry this time is stored in the RAM 17 as operation request data (step S12).

When it is determined that the operation requested by the key entry is not the predetermined operation in step S8, a check is made to see if the key entry indicates a request of stopping the present R mode or not (step S13). When it is determined that the key entry is not commanding stop of the R mode, a process according to the key entry is then executed (step S14). When it is determined that the key entry is the stop request, the operation is immediately stopped (step S15) regardless of whatever operation currently executed by the CD player, and the reserved operations up to the preceding reservation which have been stored in the RAM 17 are cancelled (step S16).

The above description has been made to processes performed when a key entry is detected in step S2.

After the determination of no key entry in step S2, or after the completion of the process performed when there is a key entry, the flow shown in Fig. 3 is succeeded by the flow shown in Fig. 4 in which a check is first made to see if the CD player is currently executing the R mode or not (step S17). When it is determined that the R mode is not being executed, the operating process according to the requested predetermined operation is executed (step S18). In the flow which sequentially shifts from step S2 to steps S17 and S18, no process is executed in step S18 since there is no key entry and the CD player is not in the R mode in such a flow.

When it is determined in step S17 that the R mode is being executed, a check is made to see if the CD player is currently executing the predetermined operation which has been reserved before or not (step S19).

When it is determined that the predetermined operation is being executed in step S19, the processing routine proceeds to step S18. When it is determined that the predetermined operation is not being executed, but is completed, a check is made to see if there is a next reservation of operation in the RAM 17 or not (step S20). When it is determined in step S20 that there exists no operation request data instructing the operation to be executed next in the RAM 17, the CD player is placed in a stand-by mode (step S21).

When the operation request data to be executed next exists in the RAM 17, the operation request data is read and the operation corresponding thereto is started (step S22) and the processing routine proceeds to step S18.

After completion of the operation processing in step S18, the processing routine again goes to step S2 and a series of operations in the above-described flow are repeated.

The main operation in the reserving mode will now be described.

For instance, when the R mode key is depressed in a state in which the CD player is not executing any operation, the operations through steps S2, S3, and S4 are performed. After that, the new R mode is started in step S5 from this point in time, and the processes in steps S17, S19, S20, S21, and S18 are sequentially executed. Thereafter, when a key requesting a predetermined operation, for example, the reproduction key for requesting the reproduction operation is depressed, the operations in steps S2, S3, S8 and S9 are sequentially performed. The reproduction operation command is given to the playing means and the reproduction operation is started in step S10 and the processes in steps S17, S19, and S18 are sequentially executed. When, for example, a scan key is depressed as a next operation request command during the execution of this reproduction operation, the processes in steps S2, S3, S8, S9, and S11 are sequentially performed. After that, the scan operation request data is stored into the RAM 17 in step S12 and the processes in steps S17, S19, and S18 are sequentially performed, so that the reproduction operation is continued. In a manner similar to the above, when a random reproduction key is further depressed subsequently, the random reproduction operation request data is stored into a memory area in the RAM 17 locating at the position next to the scan operation request data in step S12, and the reproduction operation is continued. The predetermined operation request data is stored in the RAM 17 until the reproduction operation is finished subsequently. The operations subsequent to the reproduction operation which is being executed are reserved in order.

After several operating reservations after completion of the reproduction operation have been reserved as mentioned above, when the reproduction operation is completed, the processes in steps S2, S17, and S19 are sequentially executed. Since it is determined in step S20 that the next operation is reserved, a commend of the next operation, that is, a scan operation command in this case is generated in step S22. After the completion of the scanning operation also, the next operation, namely, a random reproduction operation is similarly started in step S22. During the execution of the R mode, when another predetermined operation not limited to the above-described reproduction operation is being executed, reservation of an operation can be made at an arbitrary timing. Since the CD player is placed to the stand-by mode in step S21 even after all of the reserved operations have been completed, the operations as mentioned above can be executed once more.

When cancellation of the R mode is requested by the depression of the R mode key once more during the execution of the R mode, operations in steps S6 and S7 are executed after passing through steps S2, S3, and S4 sequentially. When the processes in steps S6 and S7 are executed, the CD player is released from the R mode and the reserved operation is cancelled.When a predetermined operation key is depressed after that, the preceding operation is finished and the predetermined operation is executed immediately without making a reservation, or the acceptance of the key entry through the predetermined operation key is avoided. When the cancellation of the contents in the present R mode, in other words, the cancellation of the operation being executed and the reserved operation is requested by the depression of the stop key during the execution of the R mode, the operations in steps S15 and S16 are executed after passing through the steps S2, S3, S8, and S13 sequentially. When the operations in steps S15 and S16 are executed, the operation which is being executed is stopped, and the reserved operation is cancelled, so that the operation and execution of a newly selected R mode can be performed.

In the above first embodiment, during the execution of the R mode, when another operation request command is generated during the execution of the preceding predetermined operation, such a command is stored into the memory. After completion of the operation which is being executed, the stored operation command data is read out and the operation according to the operation request data is automatically executed in sequence. Therefore, the user can give the next operation request command without need of waiting for the completion of the operation which is being executed, so that the reservation of operation is made.

In the second embodiment of the invention, reservation of a predetermined operation is enabled by the provision of a registration mode, instead of the R mode in the first embodiment. After a so-called operation program has been completed, the operation program is executed and a series of operation control steps are performed.

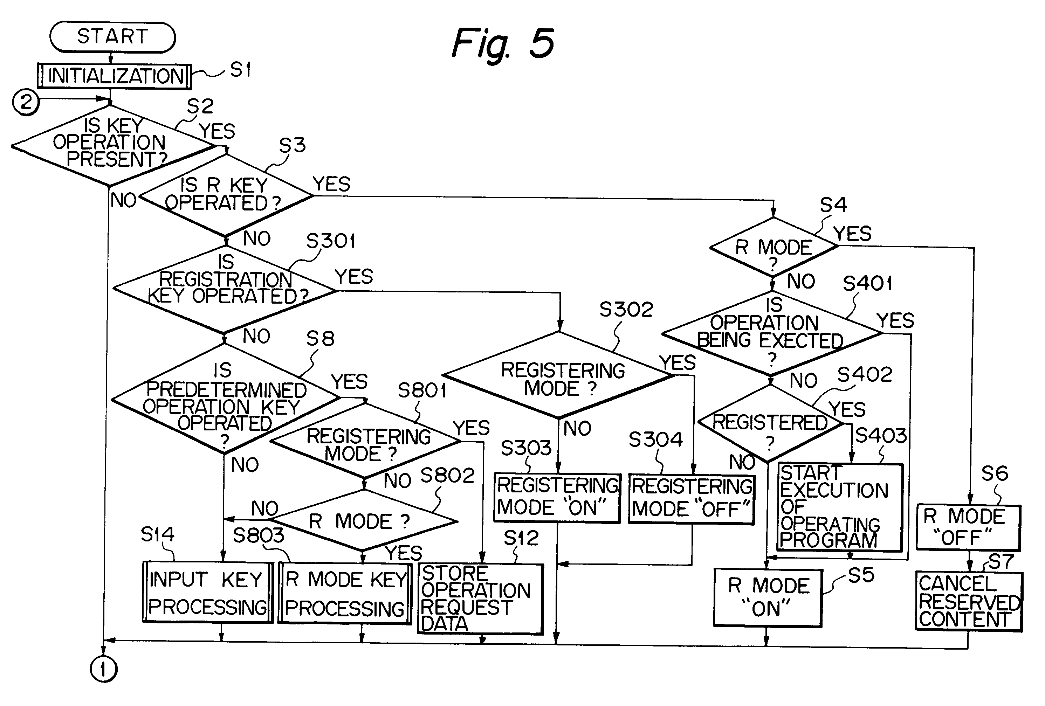

Figs. 4 and 5 are flowcharts showing a processing procedure for the registration mode according to the second embodiment briefly described above.

In Fig. 5, processing steps similar to those shown in Fig. 3 already explained are designated by the same reference numerals and the detailed description thereof is omitted.

When the key entry is the designation of the R mode and the CD player is not executing the R mode currently, the operations in steps S2, S3, and S4 are sequentially executed and a check is made to see if a predetermined operation is being executed or not – (step S401). When it is determined in step S401 that the CD player is executing the predetermined operation, the processing routine proceeds to step S5 and the R mode is set. When it is determined that the R mode is not being executed, a check is made to see if a series of operation request data, that is, an operation program has been registered in the RAM 17 or not (step S402). When it is determined in step S402 that the operation program is not registered in the RAM 17, the processing routine advances to step S5. When it is determined that the operation program has been registered, the registration content in the RAM 17, namely, the stored operation request data is read and the operation is started (step S403) and after that, the program proceeds to step S5.

When the key entry is not the designation of the R mode, the processes in steps S2 and S3 are sequentially executed and a check is made to see if there is a key entry of the registration key or not (step S301). When it is determined that the key entry is not through the registration key, the processor proceeds to step S8. When it is determined that there is a key entry through the registration key, a check is made to see if the CD player is currently in the registration mode or not (step S302).

When it is determined in step S302 that the CD player is not in the registration mode, a new registration mode is started from this point in time (step S303). When it is determined that the registration mode is set currently, it means that the key entry through the registration key is again detected after the start of the present registration mode, and it is determined that the key entry indicates a request of cancellation of the present registration mode, and the registration mode is cancelled(step S304). The processing routine advances to step S17 after completing the operations in step S303 or S304.

When the key entry is to request a predetermined operation, the processes in steps S2, S3, S301, and S8 are sequentially executed and a check is made to see if the CD player is currently in the registration mode or not (step S801). When it is determined in step S801 that the CD player is not in the registration mode, a check is made to see if the CD player is currently in the R mode or not (step S802). When it is determined that the registration mode is being executed, the processing routine proceeds to step S12 so that operation request data according to the predetermined operation is stored in the RAM 17.

When it is determined that the CD player is not in the R mode in step S802, the processing routine proceeds to step S14, and when the R mode is set, an R mode key process is executed (step S803). The R mode key process corresponds to a series of processes such as those surrounded by a broken line in Fig. 3, namely, steps S9 to S12 in the first embodiment.

The main operation in the registration mode will now be described.

For instance, when the registration key is depressed in a state in which the CD player is not executing any operation, the operations in steps S2, S3, S301, and S302 are sequentially executed and, subsequently, a new registration mode is started in step S303 from this point in time and the processes in steps S17 and S18 are sequentially performed. Thereafter, when a key requesting a predetermined operation, for example, the reproduction key for requesting the reproduction operation is now depressed, the processes in steps S2, S3, S301, S8, and S801 are sequentially executed. The reproduction operation request data is stored into the RAM 17 in step S12 and the operations in steps S17 and S18 are sequentially performed. Similarly, if the scan key and the random reproduction key, for example, are further depressed continuously after that, the scan reproduction operation request data and the random reproduction operation request data are sequentially stored in the memory areas in the RAM 17 at the positions next to the reproduction operation request data in step S12. By the repetition of the flow through step S12, after the registration key has been depressed again to perform operations in steps S2, S3, S301, and S302, the input predetermined operation request data is sequentially stored in the RAM 17 until the registration mode is cancelled in step S304, and a series of operation programs are registered.

When a predetermined operation request key is depressed after completion of the registration of the operation program as mentioned above, the processes in steps S2, S3, S301, S8, S801, and S802 are sequentially executed and, subsequently the requested predetermined operation is started in step S14.

In this embodiment, when the operation program already registered in the RAM 17 is to be executed, the R mode key is depressed. That is, after the operation program as mentioned above has been registered, when the R mode key is depressed, the operations in steps S2, S3, S4, S401, and S402 are sequentially executed and, subsequently the operation program is read out from the RAM 17, the operation is started, and the R mode is started in steps S403 and S5 from this point in time. The operations in steps S17 and S19 are executed and the operating process according to the operation program is started in step S18. A series of operation processing procedures based on the registration operation program, namely, the processes in steps S17 to S22 are substantially the same as those in the first embodiment already described.

When the registration key is depressed during the execution of the R mode, the registration mode can also be set simultaneously. In this case, priority is given to the registration mode in step S801 and when there is a key entry of the predetermined operation request key, the operation command data does not become reserved operation request data in the R mode. Instead, the operation command data is registered in the RAM 17 as one operation request data in the operation program produced in the registration mode in step S12.

When the registration mode is executed during whatever another predetermined operation without limited to the R mode, the operation can be registered at an arbitrary point in time.

The switching between the ordinary R mode and the registration mode as shown in the first embodiment can be performed by the depression of the independent keys $K_1$ and $K_2$ as shown in Fig. 2. However, for preventing increase in number of keys a whole, and in view of the fact that both the R mode and the registration mode are regarded as a process previously accepting (reserving) a so-called predetermined operation, the apparatus can be arranged so that the above-mentioned switching operation is executed by a single key. Specifically, it is sufficient to construct a processing routine in a manner such that, in case of assigning the function of designating one of two modes, for example, to the R mode key as an input key which is commonly used for such a designation, the ordinary R mode is executed when the R mode key is depressed during the execution of a certain operation, and the registration mode is performed when the R mode key is depressed in a state in which no operation is executed.

In the ordinary R mode, when the capacity of the memory is limited or in order,to allow, as a function of the R mode, operation programs inputted (added) successively, it is necessary to construct such that the operation request data which has already been executed is successively erased from the memory.

During the execution of the R mode as in the first embodiment describe above, if the user wishes to immediately turn off the power supply or to open the CD tray 19a or the like, it is generally necessary to request such an operation after the R mode is canceled. This is because the turn-off of the power supply and the opening of the tray also are kinds of operation request processes, such operations are reserved into the memory during the execution of the R mode.

According to the third embodiment of the invention, for operations that should be done urgently, the operation is immediately performed if the operation is requested continuously even when the R mode is being executed.

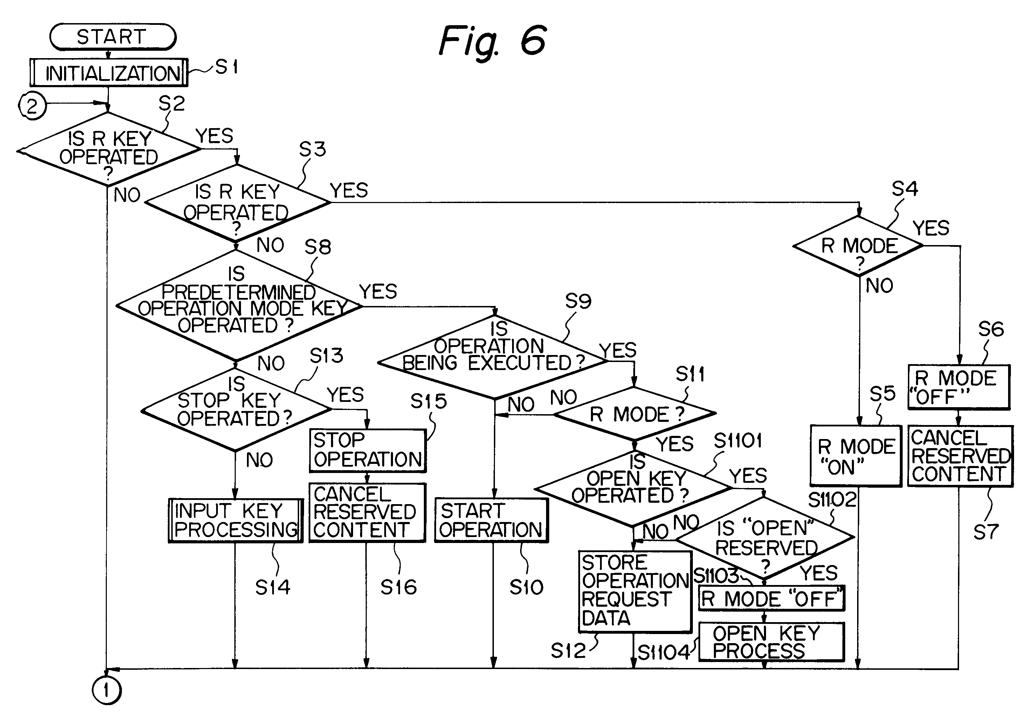

Fig. 6 is a flowchart showing an example of a processing procedure for a compulsive or interruptive control of operation during the execution of the R mode according to the third embodiment. In Fig. 6, processing steps similar to those shown in Fig. 3 are designated by the same reference numerals and their detailed descriptions are omitted.

In the drawing, during the execution of the R mode, when a predetermined operation key is operated during the execution of a certain operation, the system controller 15 sequentially executes the processes in steps S2, S3, S8, S9, and S11 and discriminates whether the requested predetermined operation is an operation for opening the tray or not (step S1101). When it is determined that the predetermined operation is not the operation for opening the tray, the program proceeds to step S12 and the operation request data is stored in the RAM 17. When it is determined that the predetermined operation is the operation for opening the tray, a check is made to see if the preceding operation request data which has been reserved in the RAM 17 indicates the operation for opening the tray (Step 1102).

When it is determined in step S1102 that the preceding data reserved is not the tray opening operation request data, the processing routine advances to step S12. When it is determined that the reserved data is the tray opening operation request data, the R mode is cancelled (step S1103). Subsequently a tray open key process is performed (step S1104), the processes in steps S17 and S18 are sequentially executed, and the operation to open the CD tray 19a is executed.

With respect to the operation of the power supply key, if the process is executed on the basis of a principle similar to the above, the power supply can be forcibly turned off even when the R mode is being executed. In addition to the operation of the above tray-open and the power supply key, when there is another key entry which requires urgent operation or key entry having a high priority which is established in consideration of an importance of the operation, those operations can be also executed in similar manners.

In the case of the embodiment described above, there are advantages that the operation can be forcibly executed in response to the request of operation which requires an urgent execution and that it can contribute to reduce the number of keys as a whole or to improve the efficiency of operation. The procedure that the operation is forcibly executed when the key entry is made consecutively also has an advantage that it allows an inexperienced user to operate the apparatus. That is, such a forced operation is adapted to a tendency such that a user who doesn't understand the function of the R mode will repeatedly depress a key if an operation which he wants to execute immediately is not executed when the key for requesting such an operation is depressed once.

As mentioned above, according to the first aspect of the invention, the kind of operation request signal or operation command is discriminated by the first discriminating means, it is then discriminated by the second discriminating means that at least one operation is to be executed among quick response operation, writing operation, and memorized content executing operation in accordance with the operation request signal or the operation command which has been discriminated by the first discriminating means and a designated mode, and in the control means, the operation command corresponding to the quick response operation is generated quickly in response to the operation request signal by the quick response means when the quick response operation is discriminated by the second discriminating means, the operation request signal or the operation command is sequentially stored by the reserved operation memory means when the writing operation is discriminated, and the operation request signal or the operation command stored in the reserved operation memory means is read out and provided by the executing means when the memorized content executing operation is discriminated, thereby controlling the operation. When a new operating process is executed subsequent to a certain operating process, therefore, the next operating request can be accepted and reserved without waiting for the end of the preceding operation. The operation to be next executed is also determined in accordance with the kind of the requested operation by means of the first and second discrimination means without deciding the operation on the basis of only the content of the designated mode. Therefore, the operation to be performed can be determined also in consideration of the importance of the operation requested. The operating efficiency can be improved including the improvement in psychological feeling of the user operating the apparatus.

According to the second aspect of the invention, it is discriminated by discriminating means that at least one operation is to be executed among the quick response operation, writing operation, and memorized content executing operation in accordance with a designated mode, and in the control means, an operation command corresponding to the quick response operation is generated quickly in response to an operation request signal by the quick response means when the quick response operation is discriminated by the discriminating means, the operation request signal or the operation command is sequentially stored by the reserved operation memory means when the writing operation is discriminated, and the operation request signal or the operation command stored in the reserved operation memory means is read out and provided by the executing means when the memorized content executing operation is discriminated. When the new operating mode is executed subsequent to a certain operating mode, therefore, the next operation command can be accepted and reserved without need to wait for the completion of the preceding operation. Thus, the user can address the next requesting operation without worrying about the completion of the preceding operation at a point in time when the user thinks of the next requesting operation, so that improvement in operating efficiency as well as improvement in the psychological feeling of the user operating the apparatus is attained.

**Claims**

1. An information recording medium playing apparatus having control means for giving an operation command according to an operation request signal being supplied and executing an operation according to said operation command, comprising:
   first discriminating means for discriminating the kind of said operation request signal or said operation command; and
   second discriminating means for discriminating at least one operation to be executed among a quick response operation, a writing operation, and a memorized content executing operation in accordance with a designated mode and said operation request signal or said operation command which has been discriminated by said first discriminating means,
   wherein said control means comprises:
   quick response means for generating the operation command corresponding to said quick response operation quickly in response to said operation request signal when the quick response operation is discriminated by said second discriminating means;
   reserved operation memory means for sequentially storing said operation request signal or said operation command when said writing operation is discriminated; and
   executing means for reading out and generating said operation request signal or said operation command which has been stored in said reserved operation memory means when said memorized content executing operation is discriminated.

2. An apparatus according to claim 1, wherein said first discriminating means discriminates whether a predetermined operation request signal or a predetermined operation command has been supplied or not, and said second discriminating means discriminates said quick response operation when said predetermined operation request signal or said predetermined operation command is supplied.

3. An information recording medium playing apparatus having control means for giving an operation command according to an operation request signal being supplied and executing an operation according to said operation command, comprising:
   discriminating means for discriminating at least one operation to be executed among a quick response operation, a writing operation, and a memorized content executing operation in accordance with a designated mode,
   wherein said control means comprises:
   quick response means for generating an operation command corresponding to said quick response operation quickly in response to said operation request signal when said quick response operation is discriminated by said discriminating means;
   reserved operation memory means for sequentially storing said operation request signal or said operation command when said writing operation is discriminated; and
   executing means for reading out and generating the operation request signal or the operation command which has been stored in said reserved operation memory means when said memorized content executing operation is discriminated.

4. An apparatus according to claim 3, wherein said discriminating means discriminates only said writing operation during a period of time for designating a registration mode.

5. An apparatus according to claim 3 or 4, wherein said discriminating means discriminates said memorized content executing operation together with the writing operation during a period of time for designating a reserving mode when said operation request signal or said operation command regarding a next operation exists in said reserved operation memory means, and said discriminating means discriminates said quick response operation when said operation request signal or said operation command regarding the next operation doesn't exist in said reserved operation memory means.

## Fig. 1

Fig. 1 — Block diagram showing: DISPLAY (18), MEMORY (17), OPERATING PART (16), SYSTEM CONTROLLER (15), SPINDLE SERVO CCT (8), CLOCK GENERATOR (9), LOADING CONTROL SECTION (19), FOCUS SERVO CCT (4), TRACKING SERVO CCT (5), PICKUP FEEDING SERVO CCT (7), PICKUP (3), M (2), disc (1), REPRODUCTION CLOCK GENERATOR (6), EFM DEMODULATOR (10), DATA PROCESSING CCT (11), MEMORY (12), D/A (13), LPF (14), LPF (14).

# Fig. 2

EP 0 509 785 A2

Fig. 3

# Fig. 4

# Fig. 5

START

INITIALIZATION — S1

IS KEY OPERATION PRESENT? — S2
- YES
- NO

IS R KEY OPERATED? — S3
- YES
- NO

IS REGISTRATION KEY OPERATED? — S301
- YES
- NO

IS PREDETERMINED OPERATION KEY OPERATED? — S8
- YES
- NO

REGISTERING MODE? — S801
- YES
- NO

R MODE? — S802
- NO
- YES

S803

INPUT KEY PROCESSING — S14

R MODE KEY PROCESSING

STORE OPERATION REQUEST DATA — S12

R MODE? — S4
- YES
- NO

REGISTERING MODE? — S302
- YES
- NO

REGISTERING MODE "ON" — S303

REGISTERING MODE "OFF" — S304

IS OPERATION BEING EXECTED? — S401
- YES
- NO

REGISTERED? — S402
- YES
- NO

START EXECUTION OF OPERATING PROGRAM — S403

R MODE "ON" — S5

R MODE "OFF" — S6

CANCEL RESERVED CONTENT — S7

1

2

Fig. 6

EP 0 509 785 A2